# EUROPÄISCHE PATENTSCHRIFT

(11) **EP 1 891 335 B1**
(45) Veröffentlichungstag und Bekanntmachung des Hinweises auf die Patenterteilung: **29.03.2017**
(21) Anmeldenummer: 06763400.6
(22) Anmeldetag: 31.05.2006
(51) Int. Cl.: F04D 29/58, H02K 9/19, F01D 21/04, F04D 29/42

(54) **RADIALGEBLÄSE**
RADIAL FAN
VENTILATEUR RADIAL

(30) Priorität: 06.06.2005 DE 102005025865; 06.06.2005 DE 102005025857; 06.06.2005 DE 102005025858
(43) Veröffentlichungstag der Anmeldung: 27.02.2008
(73) Patentinhaber: Gebr. Becker GmbH, 42279 Wuppertal (DE)
(72) Erfinder: RADERMACHER, Bernhard, 41238 Mönchengladbach (DE); DIEDRICHSEN, Frank, 42117 Wuppertal (DE); VON KATHEN, Achim, 42349 Wuppertal (DE)
(74) Vertreter: Müller, Enno
(86) Internationale Anmeldenummer: PCT/EP2006/062756
(87) Internationale Veröffentlichungsnummer: WO 2006/131470

(56) Entgegenhaltungen:
- EP-A1- 0 650 690
- WO-A-2004/036052
- WO-A1-99/13223
- DE-A1- 2 706 110
- DE-C1- 10 107 807
- DE-U1- 20 201 118
- US-A- 3 652 176
- US-A- 5 857 348
- US-A1- 2004 005 228

## Beschreibung

Die Erfindung betrifft ein Radialgebläse nach den Merkmalen des Oberbegriffes des Anspruches 1.

Radialgebläse der in Rede stehenden Art, insbesondere hochtourig drehende Radialgebläse sind bekannt und finden beispielsweise Einsatz im Zusammenhang mit Lasern. Da hierbei erhebliche Wärmelasten abgeführt werden müssen, ist eine Kühlung vorgesehen.

Aus der DE 2706110 A1 ist es im Hinblick auf einen Berstschutz bekannt, einen Teil der Wand des Verdichtergehäuses mit einer eingegossenen oder übergeschobenen Verstärkung zu versehen. Aus der DE 10107807 C1 ist es in einem solchen Zusammenhang bekannt, einen Gehäuseeinsatz vorzusehen und in axialer Richtung diesen flexibel und weniger bruchsicher als die starre Fixierung des Verdichtergehäuses insgesamt am Lagergehäuse auszuführen.

Ausgehend von dem vorgenannten Stand der Technik beschäftigt sich die Erfindung mit der Aufgabenstellung, einen günstigen Berstschutz im Hinblick auf einen Rotor eines Radialgebläses vorzusehen. Diese Aufgabe ist beim Gegenstand es Anspruches 1 gelöst, wobei darauf abgestellt ist, dass zur Ausbildung eines das Laufrad umschließenden Käfigs deckelseitig und unterseitig des Laufrades Käfigplatten vorgesehen sind, die umfangsseitig des Laufrades durch bspw. stiftartige Verbindungsmittel zusammen gehalten sind, wobei zumindest die Verbindungsmittel und die deckelseitige Käfigplatte aus einem zähharten Werkstoff wie Stahl bestehen.

Der so geschaffene Berstschutz verhindert zunächst bei einem Bersten des Laufrades das Abheben bzw. die Zerstörung des deckelseitigen Gehäuseteils, welches aus einem Leichtmetall-Gusswerkstoff besteht. Ein solches Abheben bzw. Zerstören des Deckels würde zu einer Vergrößerung des nach außen hin sich bei einem Radialgebläse öffnenden Luftspaltes führen, durch welchen vergrößerten Spalt größere Bruchstücke des geborstenen Laufrades in hoher Geschwindigkeit entweichen könnten. Dieser Gefahr ist durch die Anordnung aus einem zähharten Werkstoff wie Stahl, wie weiter bspw. ST 50 bestehende deckelseitigen Käfigplatte entgegengewirkt. Diese deckelseitige Käfigplatte bildet ein Schutzschild für den rückwärtig, das heißt auf der dem Laufrad abgewandten Seite der Käfigplatte angeordneten Deckel. Auch sind die deckelseitig und unterseitig des Laufrades vorgesehenen Käfigplatten gegen Verlagerung - sowohl in radialer als auch in axialer Richtung - gesichert, wozu stiftartige Verbindungsmittel vorgesehen sind. Diese halten die Käfigplatten auf ein vorbestimmtes, axiales Abstandsmaß. Da erfindungsgemäß auch diese Verbindungsmittel aus einem zähharten Werkstoff wie Stahl bestehen, sind auch diese vor einer Zerstörung durch Berststücke geschützt.

Es kann vorgesehen sein, dass zur Ausbildung des Deckels das Gehäuse parallel zu einer Umdrehungsebene des Laufrades geteilt ist. Weiter erweist es sich als besonders vorteilhaft, wenn beide Käfigplatten aus einem zähharten Werkstoff wie Stahl, weiter bspw. wie ST 50 bestehen. Zur Folge dieser Ausgestaltung ist der das Laufrad umschließende Käfig gänzlich aus einem zähharten Werkstoff geformt. Der Radialspalt zum Luftaustritt ist in Dickenrichtungen, das heißt gemessen parallel zur Laufradachse so gewählt, dass bei einem Bersten des Laufrades im ungünstigsten Fall nur kleine Bruchstücke nach radial außen gelangen können. Größere und somit auch gefährlichere Bruchstücke können diesen Ringspalt nicht durchtreten, da der vorgesehene Käfig keine Spalterweiterung zulässt. Neben dem erwähnten Deckel kann auch das Gehäuse als ein Leichtmetall-Gussteil ausgebildet sein, so weiter bspw. aus Aluminium. Durch die unterseitig das Laufrad umschließende Käfigplatte ist auch ein solches Leichtmetall-Gehäuse vor Zerstörung durch Bruchstücke geschützt. In einer bevorzugten Ausgestaltung sind die Verbindungsmittel sowohl in dem Gehäuse als auch in dem Deckel schraubgehaltert und bilden demzufolge zusätzlich eine reiß- und schlagfeste Verbindung von Gehäuse und Deckel. Die Kraftübertragung bei einem Bersten erfolgt in erster Linie über auf die Verbindungsmittel aufgeschraubte, die Käfigplatten rückwärtig abstützende Stahlmuttern, die einer Spaltvergrößerung zwischen den Käfigplatten entgegenwirken. Alternativ zu einer Stahlmutter kann auch an dem Verbindungsmittel ein Stahlbund ausgeformt sein. Bevorzugt ist unterhalb des Gehäusedeckels ein Diffusorteil angeordnet, wobei die deckelseitige Käfigplatte zwischen dem Gehäusedeckel und dem Diffusorteil angeordnet ist. Hierbei durchsetzen die Verbindungsmittel auch das Diffusorteil zum schraubgehalterten Eingriff in den Gehäusedeckel. In einer Weiterbildung des Erfindungsgegenstandes ist vorgesehen, dass unterhalb des Laufrades ein erstes Gehäuseteil angeordnet ist, an dem auf der dem Laufrad abgewandten Seite ein Kühlkanaldeckel angebracht ist. Zwischen Laufrad und erstem Gehäuseteil ist bevorzugt die unterseitige Käfigplatte angeordnet. Das erste Gehäuseteil kann zudem Kühlkanäle aufweisen, die mit dem unterseitig anzuordnenden Kühlkanaldeckel verschlossen sind. An dem ein Kühlkanalgehäuse ausformenden ersten Gehäuseteil ist das den Elektroantrieb für das Laufrad aufnehmende Gehäuse befestigt. Die Verbindungsmittel sind einerends festgelegt in dem Kühlkanalgehäuse und anderenends bevorzugt in dem Gehäusedeckel, dies unter Zwischenschaltung der beiden Käfigplatten sowie des Diffusors und des ersten Gehäuseteiles. Zur Schraubfestlegung sind die Verbindungsmittel in einer bevorzugten Ausgestaltung als endseitig Schraubgewinde aufweisende Stifte ausgebildet. Zudem wird vorgeschlagen, dass die Käfigplatten als kreisringförmige Teile ausgebildet sind, dies weiter bevorzugt mit einem Käfigplatten-Innendurchmesser, der an den Außendurchmesser des Laufrades angepasst ist, so weiter mit einem geringen Übermaß zu dem Laufrad-Außendurchmesser versehen ist. Die Radialerstreckung des kreisringförmigen Teils, entspricht einem Radialmaß oder weniger des Laufrades, so weiter etwa einem Drittel, einem Viertel, der Hälfte oder auch zwei Drittel oder drei Viertel oder darüber hinaus auch weitere Radialmaß-Bruchteile. Das Laufrad weist Schaufeln auf, mit in Radialrichtung unterschiedlichen Höhen, wobei der durch die Käfigplatten gebildete Spalt nur einen Teilbereich der Höhe der Schaufeln überdeckt und zwar den Teilbereich, der mindestens der Höhe der Schaufeln in ihrer größten radialen Erstreckung entspricht. Demzufolge ist der Spalt zwischen den Käfigplatten angepasst an das in Axialrichtung betrachtete Maß des Laufrades bzw. dessen Schaufeln im radial äußeren Bereich. Entsprechend beträgt das Spaltmaß nur einem Bruchteil der in Axialrichtung gemessenen Gesamthöhe des Laufrades, das heißt einem Bruchteil des maximalen Höhenmaßes der Schaufeln. So entspricht der Spalt bevorzugt etwa der Hälfte der maximalen Schaufelhöhe, kann darüber hinaus aber auch etwa einem Viertel, einem Drittel oder auch zwei Drittel bis drei Viertel der maximalen Schaufelhöhe entsprechen. Zudem ist vorgesehen, dass die untere Käfigplatte sich in Axialrichtung bis in einen Fußbereich der Schaufeln erstreckt, und weiter bevorzugt radial Innen das Laufrad untergreift. Entsprechend ist die untere Käfigplatte mit einer an den maximalen Außenradius des Laufrades angepassten Einsenkung versehen, in welcher das Laufrad einliegt. Der Untergreifabschnitt der unteren Käfigplatte weist hierbei ein radiales Erstreckungsmaß auf, welches etwa dem kleinsten Höhenmaß der Schaufeln in ihrer größten radialen Erstreckung entspricht. Zur reiß- und schlagfesten Ausbildung des Käfigs ist weiter vorgesehen, dass bei einem Durchmesser von 100 Millimetern oder mehr des Laufrades im Fußbereich mindestens ein Verbindungsstift je 25 Millimeter Durchmesser vorgesehen ist. Entsprechend sind bei einem Laufrad mit einem Durchmesser von 100 Millimeter und mehr mindestens vier Verbindungsstifte vorgesehen, die zudem gleichmäßig über den Umfang verteilt angeordnet sind. Diesbezüglich wird weiter bevorzugt, dass bei 150 Millimeter Durchmesser sechs oder mehr Verbindungsstifte, so bspw. sieben, acht oder zehn Verbindungsstifte über den Umfang winkelmäßig gleichmäßig verteilt vorgesehen sind, welche Verbindungsstifte alle bevorzugt schraubverbunden einerends in dem Gehäusedeckel und anderenends in dem Kühlkanaldeckel ankern.

Im Hinblick auf die Abführung von Wärmelasten kann vorgesehen sein, dass in dem Gehäuse Wege für ein erstes und ein zweites Kühlmedium vorgesehen sind, zur Kühlung des zweiten Kühlmediums durch das erste Kühlmedium mittels des Gehäuses und dass diese Wege durch unversehrte Materialwandungen des Gehäuses voneinander getrennt sind. Es ist demzufolge ein dichtungsfreies System geschaffen, welches erlaubt, das Radialgebläse, insbesondere dessen Gehäuse und/oder den Rotor-/Stator-Bereich zweifach zu kühlen, nämlich mit einem ersten Kühlmedium und einem zweiten Kühlmedium, wobei das zweite Kühlmedium der Sekundärkühlung dient, während das erste Kühlmedium eine Primärkühlung bietet. Die Wege der beiden Kühlmedien sind hermetisch voneinander getrennt, welche Trennung durch Materialwandungen des Gehäuses selbst erreicht ist. Hierzu besteht das Gebläsegehäuse bevorzugt aus einem Gussmaterial, wie insbesondere einem Leichtmaterial, beispielsweise Aluminium, welches dickwandig ausgebildet ist.

In einer bevorzugten Ausgestaltung ist vorgesehen, dass die Wege in dem Gehäuse windschief zueinander verlaufen, also räumlich betrachtet nicht zueinander parallel ausgerichtet sind. Vielmehr schließen die Wege der beiden Kühlmedien in einer Projektion beispielsweise einen spitzen Winkel ein, der durchaus in einer Projektion zu einer Kreuzung der Kühlmedienwege führt. Bevorzugt ist eine Ausgestaltung, bei welcher die Wege senkrecht zueinander verlaufen, wobei beispielsweise sich Wege des ersten Kühlmediums parallel zur Laufradwellenachse erstrecken, während die Wege des zweiten Kühlmediums im Wesentlichen in Umfangsrichtung mit Bezug auf die Laufradwellenachse verlaufen. Die Wege sind in dem Gehäuse gusstechnisch und/oder als Bohrungen ausgebildet. So können im Zuge des Gießvorganges zur Herstellung des Gehäuses diese Wege zugleich ausgeformt werden. Alternativ können insbesondere bei einem Gehäuse-Massivbauteil die Wege durch Bohrungen ausgeformt werden. Die Wege des ersten Kühlmediums sind bevorzugt außenwandseitig des Gehäuses in einer querschnittsmäßig kammerartigen Gehäuseausnehmung angeordnet. Diese kammerartige Gehäuseausnehmung ist bevorzugt im Zuge des Herstellungsprozesses in dem Gehäuse frei geformt, so insbesondere im Zuge der Herstellung durch gießen. Die kammerartige Gehäuseausnehmung ist mit Bezug auf das Gehäuse nach radial Außen geöffnet, wobei weiter in der kammerartigen Gehäuseausnehmung die Wege zweier über den Umfang verteilter Wege des ersten Kühlmediums angeordnet sind. Entsprechend münden bevorzugt in Umfangsrichtung zwei aufeinander folgende Wege des ersten Kühlmediums in einer Gehäuseausnehmung. In einer bevorzugten Ausgestaltung des Erfindungsgegenstandes ist vorgesehen, dass über den Umfang drei oder mehr kammerartige Gehäuseausnehmungen vorgesehen sind. So weiter bevorzugt vier derartige Gehäuseausnehmungen, die in Umfangsrichtung gleichmäßig verteilt angeordnet sind. In Axialrichtung des Gehäuses sind die kammerartigen Gehäuseausnehmungen von integralen Wänden des Gehäuses begrenzt. Auch in Umfangsrichtung sind zwei benachbarte kammerartige Gehäuseausnehmungen durch einen Massivabschnitt des Gehäuses voneinander getrennt, welcher Massivabschnitt von mindestens einem Weg für das erste Kühlmedium zur Verbindung dieser benachbarten kammerartigen Gehäuseausnehmungen durchsetzt ist. Die kammerartigen Gehäuseausnehmungen sind durch eine sich in Axialrichtung des Gehäuses erstreckende Abdeckung verschlossen. Demzufolge sind die allseits umschlossenen kammerartigen Gehäuseausnehmungen Teil des Weges für das erste Kühlmedium. Es ist entsprechend unter Berücksichtigung von über den Umfang verteilt angeordneten Gehäuseausnehmungen und jeweils zwischen zwei benachbarten Gehäuseausnehmungen vorgesehen, den Gehäuseabschnitt durchsetzenden Wege ein Kreislauf in Umfangsrichtung des Gehäuses geschaffen. Die Abdeckung kann als das Gehäuse umfassendes Rohrteil ausgebildet sein. Alternativ können auch plattenförmige Einzelabdeckungen einer jeden kammerartigen Gehäuseausnehmung zugeordnet sein. Wesentlich hierbei ist der dichtende Verschluss jeder einzelnen Gehäuseausnehmung. Eine kammerartige Gehäuseausnehmung ist bevorzugt als Kühlmediumzulauf und eine weitere kammerartige Gehäuseausnehmung als Kühlmediumablauf gebildet. Entsprechend sind bevorzugt zugeordnet diesen Gehäuseausnehmungen bzw. den diese verschließenden Abdeckungen bzw. Abdeckabschnitten mit Kupplungen oder dergleichen zum Anschluss von externen Rohr- oder Schlauchabschnitten versehen. Auch wird vorgeschlagen, dass das Gehäuse zylinderartig ausgebildet ist, wobei ein Ende dem Laufrad zugeordnet ist und das andere Ende über ein Fußteil verschlossen ist, zum hermetischen Verschluss des die Wege für die Kühlmedien sowie für die Aufnahme für den Elektroantrieb der Laufradwelle aufweisenden Gehäuses. Zum dichtenden Verschluss ist weiter vorgesehen, dass das andere Ende eine gestufte Ausformung aufweist und das Fußteil entsprechend gestuft ausgebildet ist. Insbesondere ist durch diese Stufenausformung eine Dichtung des zweiten Kühlmediumweges nach Außen erreicht. Weiter kann das Fußteil zugleich dem Gehäuseinneren zugewandt Abschnitte von Wegen für das zweite Kühlmedium ausformen. Zudem kann das Fußteil steckerartige Einlässe für die Stromversorgung einerseits und gegebenenfalls die Sensorik und zugeordnete Elektronik andererseits aufweisen. Kühlungstechnische Vorteile ergeben sich dadurch, dass in Radialerstreckung die Wege des ersten Kühlmediums jedenfalls im Bereich zwischen den kammerartigen Gehäuseausnehmungen radial Innen zu den Wegen des zweiten Kühlmediums verlaufen, wobei das zweite Kühlmedium auch das Innere des Gehäuses durchsetzt. So verlaufen bevorzugt die Wege des zweiten Kühlmediums parallel zur Achsausrichtung der Laufradwelle im Bereich der zwei in Umfangsrichtung nebeneinander angeordnete, kammerartige Gehäuseausnehmungen voneinander trennenden Gehäusemassivabschnitte. Letzterer sind sowohl in der einen Richtung von den Wegen des ersten Kühlmediums durchsetzt als auch in bevorzugt senkrechter Richtung hierzu von den Wegen des zweiten Kühlmediums. Alternativ können auch die Wege des ersten Kühlmediums radial Außen zu den Wegen des zweiten Kühlmediums vorgesehen sein. Des Weiteren ist in einer bevorzugten Ausgestaltung vorgesehen, dass die Wege des ersten Kühlmediums in Umfangsrichtung mit Bezug zu der Laufradwellenachse verlaufen. Hierbei sind mehrere in Achsrichtungen hintereinander geschaltete Wege vorgesehen, die jeweils in den kammerartigen Gehäuseausnehmungen zusammengeschaltet sind. Diese Vielzahl von Wegen für das erste Kühlmedium beschränkt sich weiter bevorzugt auf den Bereich des Elektroantriebes in dem Gehäuse. Die Wege des zweiten Kühlmediums erstrecken sich weiter bevorzugt über die nahezu gesamte axiale Länge des Gehäuses vom Laufrad bis zum gegenüberliegend vorgesehenen Fußteil. So ist in einer Weiterbildung des Erfindungsgegenstands vorgesehen, dass die Wege des ersten Kühlmediums vorrangig zur Abführung der Verlustleistung des Stators dicht an den Stator herangeführt sind derart, dass zwischen den Wegen und dem zu kühlenden Stator eine Gehäuse-Materialstärke entsprechend oder kleiner einem Kühlmediumweg-Durchmesser verbleibt. Auch wird vorgeschlagen, dass den Wegen für das zweite Kühlmedium entsprechende Axialbohrungen vorgesehen sind, die zur Aufnahme elektrischer Leitungen genutzt sind. So ist in einfachster Weise eine axiale Durchführung elektrischer Leitungen bei gleichzeitig gesicherter Isolierung zum ersten Kühlsystem erreichbar.

Hinsichtlich des Kühlsystems kann auch vorgesehen sein, dass die Kühlung insbesondere des Antriebs durch einen aus dem zu verdichteten Gas abgeteilten Teilgasstrom gegeben ist. Hierdurch ist ein Kühlsystem geschaffen, mittels welchem unter hermetischem Abschluss nach außen erhebliche Wärmelasten abgeführt werden können. Es wird hierzu das ohnehin durch das Radialgebläse verdichtete Gas zur Selbstkühlung des Gebläseantriebes, insbesondere des den Rotor und Stator aufnehmenden Gehäusebereiches genutzt, wobei der der Kühlung dienende, abgezweigte Teilgasstrom gezielt durch das Gehäuse und/ oder durch den Rotor-Stator-Bereich geführt wird. Dieser abgezweigte Teilgasstrom wird zudem nach Durchsetzen der Kühlstrecke dem durch das Gebläse-Laufrad aufgebrachten Hauptgasstrom wieder zugeführt. Zur Folge dessen ist eine hermetisch nach außen dichte Kühlung des Radialgebläses erreicht. In bevorzugter Ausgestaltung ist hierdurch ein dichtungsfreies System realisierbar.

In einer bevorzugten Weiterbildung ist vorgesehen, dass eine Kühlung des Teilgasstromes durch Kontakt mit der Gehäusewandung erfolgt, die ihrerseits aktiv gekühlt wird. So kann der Teilgasstrom durch entsprechend in dem Gehäuse vorgesehene Kanäle geführt sein, an deren Kanalwandungen ein Wärmetausch erfolgt.

Eine Verbesserung der Kühlleistung kann auch dadurch erreicht sein, dass ein aus dem zu verdichtenden Gas abgeteilter Teilgasstrom nach der Abteilung in Gehäusewegen eines Kühlkanalgehäuses, das seinerseits zumindest mittelbar aktiv gekühlt ist, geführt wird. Hierdurch wird eine (Vor-) Kühlung des Teilgasstromes erreicht. Dies zunächst primär durch Kontakt mit den die Gehäusewege begrenzenden Gehäusewandungen. Darüber hinaus sekundär durch eine separate aktive Kühlung des Kühlkanalgehäuses und somit der Wandungen der Gehäusewege. Das Gehäuse weist hierzu gute Wärmeleitfähigkeiten auf und besteht weiter bevorzugt aus einem Metallwerkstoff, so insbesondere einem Leichtmetallwerkstoff, wie beispielsweise in Form eines Aluminium-Gussteils. Um die Kühlleistung weiter zu verbessern, ist weiter eine aktive Kühlung des Gehäuses vorgesehen, die die von dem Teilgasstrom über die Gehäusewandung abgegebene Wärme aufnimmt und abführt.

Die Gehäusewege können labyrinthartig ausgebildet sein. Hierdurch kann eine großflächige Vorkühlung des Teilgasstromes durch Kontakt mit der Gehäusewandung in dem labyrinthartigen Gehäuseweg erreicht werden, wobei weiter bevorzugt die Gehäusewege von radial außen nach radial innen führen. Auch wird vorgeschlagen, dass der Teilgasstrom aus dem Hauptgasstrom radial außerhalb des Laufrades im Bereich eines Diffusors, speziell bevorzugt am Austritt aus dem Diffusor abgezweigt wird. Hierbei wird die im Betrieb des Radialgebläses vorherrschende Druckdifferenz zwischen dem höheren Druck am Diffusoraustritt und dem geringeren Druck im Motorgehäuse bzw. im Bereich des Wiedereintritts des Teilgasstromes in den Hauptgasstrom am Laufrad-Außenrand bzw. am Diffusoreintritt genutzt, um hierdurch einen selbsttätig arbeitenden Teilgas-Kühlkreislauf innerhalb des Gebläsegehäuses zu erzielen. Der Teilgasstrom wird entsprechend durch das Gebläsegehäuse und den Elektroantrieb zur Kühlung hindurchgedrückt. Es ist vorgesehen, dass der Teilgasstrom zunächst nach radial innen geführt ist und sodann die Gehäusewandung des den Elektroantrieb aufnehmenden Gehäusebereiches durchsetzt, so bevorzugt in einer Parallelausrichtung zu der Laufachse, wobei weiter im Querschnitt umlaufend um die Laufradachse mehrerer solcher den Teilgasstrom führender Kanäle oder dergleichen in dem Gehäuse vorgesehen sind. Bevorzugt wird hierbei der Teilgasstrom an dem dem Laufrad abgewandten Ende des Elektroantriebs aus dem Gehäuse in den Zwischenraum zwischen Stator und Rotor geführt, überstreicht entsprechend hierbei die Oberflächen von Rotor und Stator zur Wärmeabführung. Alternativ oder auch kombinativ hierzu kann vorgesehen sein, dass die Antriebswelle als Hohlwelle ausgebildet ist und dass der Teilgasstrom an dem dem Laufrad abgewandten Ende des Elektroantriebes aus dem Gehäuse in die Antriebswelle geführt ist, zur zentralen Durchsetzung derselben in Erstreckungsrichtung der Antriebswelle, wobei eine Wärmeabtragung durch Kontakt mit der Wellenwandung erfolgt. Bei einer kombinativen Lösung, bei welcher sowohl der Teilgasstrom durch die als Hohlwelle ausgebildete Antriebswelle als auch durch den Zwischenraum zwischen Stator und Rotor geführt ist, erfolgt bevorzugt ein Zusammenschluss dieser beiden Teilgasströme in Strömungsrichtung betrachtet hinter dem Rotor bzw. Stator, wobei weiter die Strömungsrichtung des Teilgasstromes bei Durchsetzung des Zwischenraumes zwischen Stator und Rotor und bei Durchsetzung der Hohlwelle entgegengerichtet ist zur Strömungsrichtung des Teilgasstromes, der von dem labyrinthartigen Gehäuseweg kommend das Gehäuse in Richtung auf das dem Laufrad abgewandte Ende durchsetzt. Abschließend ist der Teilgasstrom in den Hauptgasstrom am radial äußeren Umfang des Laufrades zurückgeführt. An dieser Stelle herrscht ein geringerer Druck als an der radial äußeren Position im Bereich des Diffusoraustritts, an welcher der Teilgasstrom von dem Hauptgasstrom abgezweigt wird, demzufolge sich ein differenzdruckgesteuerter Kreislauf einstellt. In einer bevorzugten Ausgestaltung des Erfindungsgegenstandes ist vorgesehen, dass die aktive Kühlung des Gehäuses als Wasserkühlung ausgebildet ist. Diese, eine Sekundärkühlung bildende Wasserkühlung ist hermetisch getrennt zu der die Primärkühlung ausbildenden Gaskühlung, wobei weiter grundsätzlich ein dichtungsfreies System vorliegt. Schließlich ist vorgesehen, dass das Gas aus Helium und/ oder Stickstoff besteht und/ oder Luft ist und/ oder ein Gemisch aus zwei oder mehreren der genannten Gase ist. Nachstehend ist die Erfindung anhand der beigefügten Zeichnung, welche lediglich Ausführungsbeispiele darstellt, näher erläutert. Es zeigt:
- Fig. 1: in perspektivischer Darstellung ein erfindungsgemäßes Radialgebläse;
- Fig. 2: eine der Fig.1 entsprechende Perspektivdarstellung, jedoch nach Abnahme eines Deckels zur Freilegung einer ersten Käfigplatte;
- Fig. 3: eine der Fig. 2 entsprechende Darstellung, jedoch nach weiterer Entfernung der Käfigplatte zur Freilegung eines Diffusors;
- Fig. 4: eine weitere Darstellung gemäß Fig.1, jedoch nach Abnahme des Diffusors zur Freilegung einer zweiten Käfigplatte und eines Laufrades;
- Fig. 5: eine weitere perspektivische Darstellung gemäß der Darstellung in Fig. 2, jedoch nach Abnahme der zweiten Käfigplatte zur Freilegung eines, einen labyrinthartigen Gehäuseweg aufweisenden Gehäuseteils;
- Fig. 6: das Radialgebläse in einer Explosionsperspektive unter Fortlassung des zum Antrieb des Laufrades benötigten Elektroantriebs;

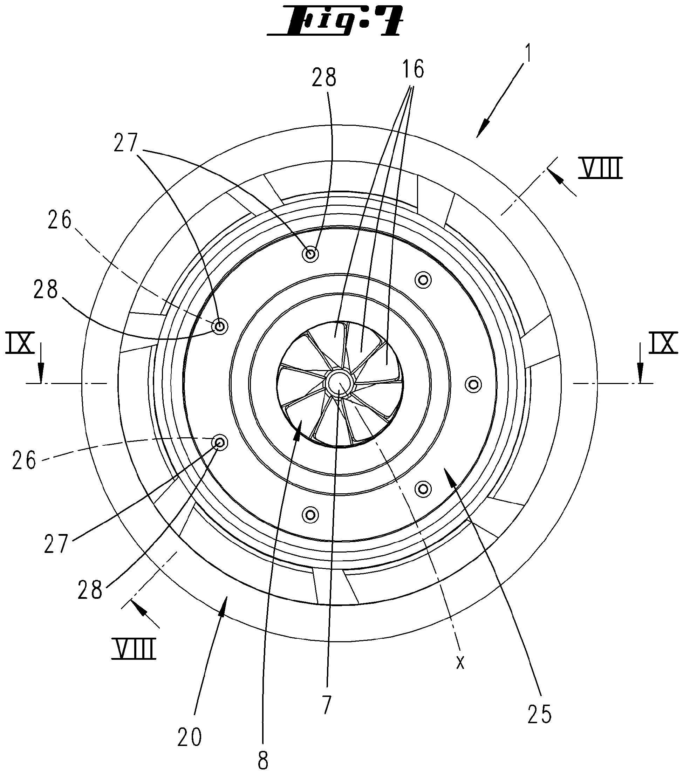

- Fig. 7: die Stirnansicht gegen das Radialgebläse;
- Fig. 8: den Schnitt durch das Radialgebläse gemäß der Linie VIII-VIII in Fig. 7;
- Fig. 8a: die in Schnittdarstellung wiedergegebene Vergrößerung des Bereichs VIIIa in Fig. 8;
- Fig. 9: den Schnitt gemäß der Linie IX-IX in Fig. 7;
- Fig.10: den Querschnitt gemäß der Linie X-X in Fig. 9, auch hier in einer Darstellung unter Fortlassung des Elektroantriebes;
- Fig. 11: eine der Fig. 9 entsprechende Schnittdarstellung, jedoch eine alternative Ausführungsform des Radialgebläses betreffend, unter Fortlassung der Käfigplatten, sowie des Gehäusedeckels;
- Fig.12: den Querschnitt gemäß der Linie XII-XII in Fig.11;
- Fig.13: in perspektivischer Darstellung das Gebläsegehäuse der zweiten Ausführungsform;
- Fig.14: eine weitere perspektivische Darstellung des Gehäuses unter Fortlassung einer das Gehäuse umfassenden Abdeckung.

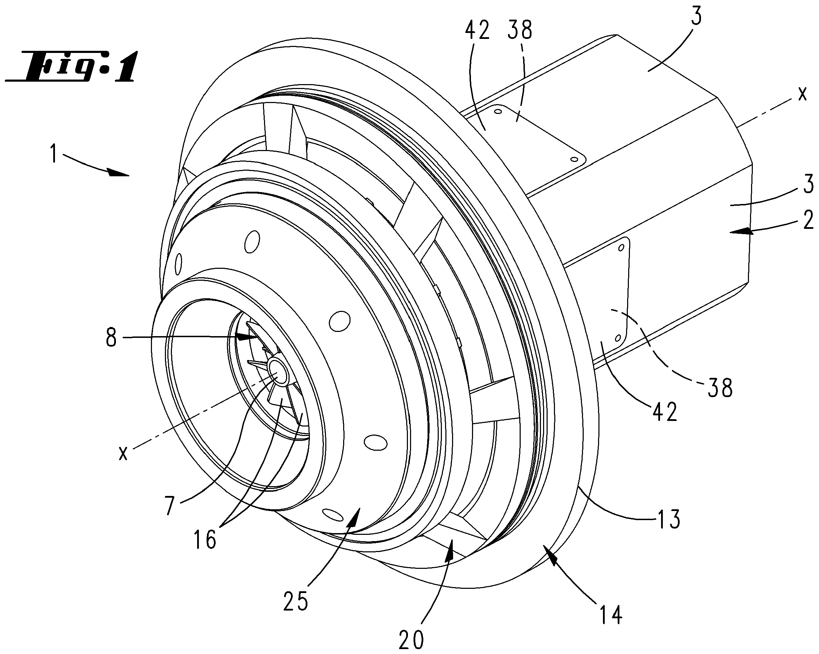

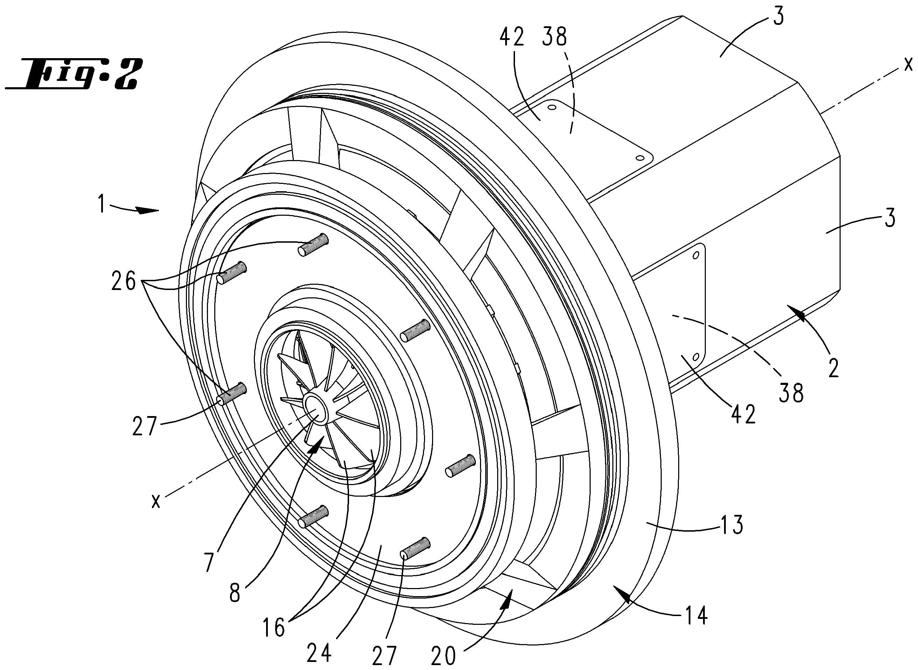

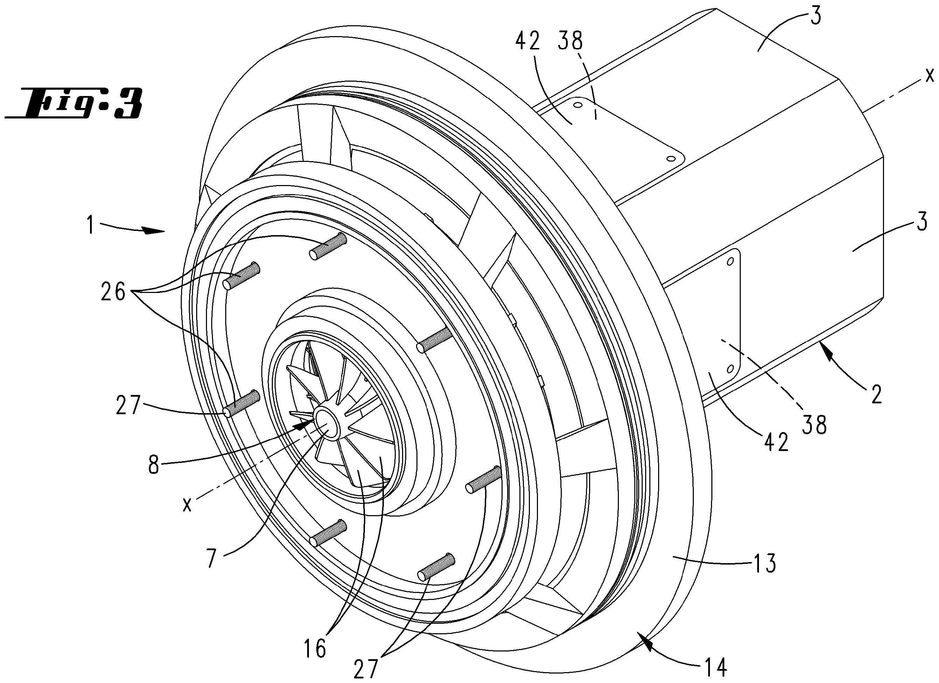

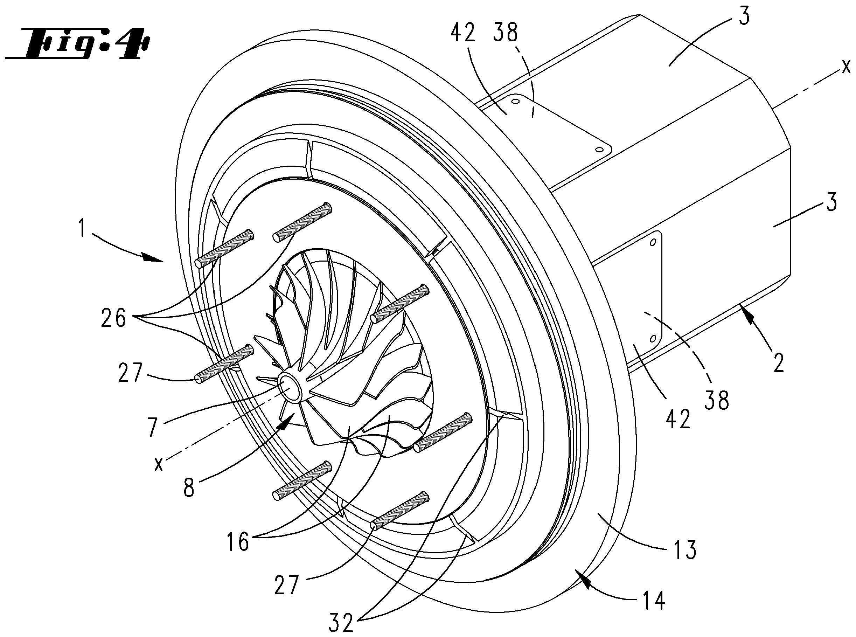

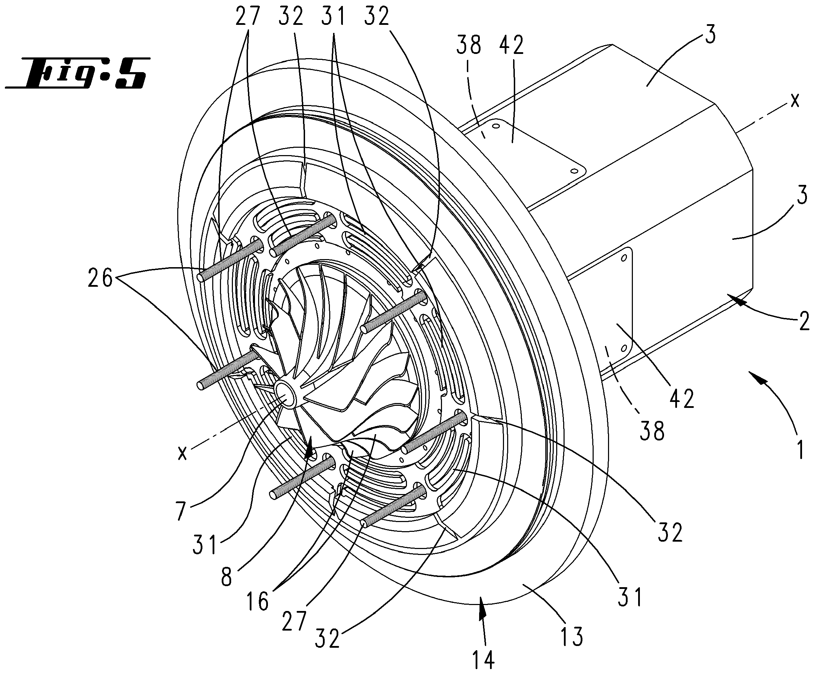

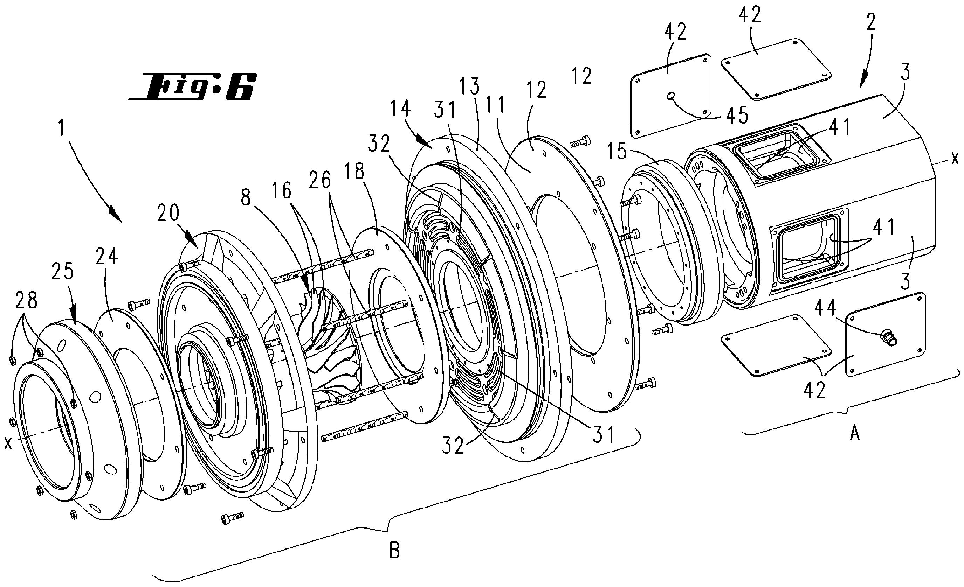

Dargestellt und beschrieben ist zunächst mit Bezug zu den Darstellungen in den Figuren 1 bis 6 ein Radialgebläse 1 in einer ersten Ausführungsform, welches als hochtouriges Radialgebläse ausgebildet ist.

Dieses Radialgebläse 1 weist einen Antriebsabschnitt A und einen diesem zugeordneten Gebläseabschnitt B auf.

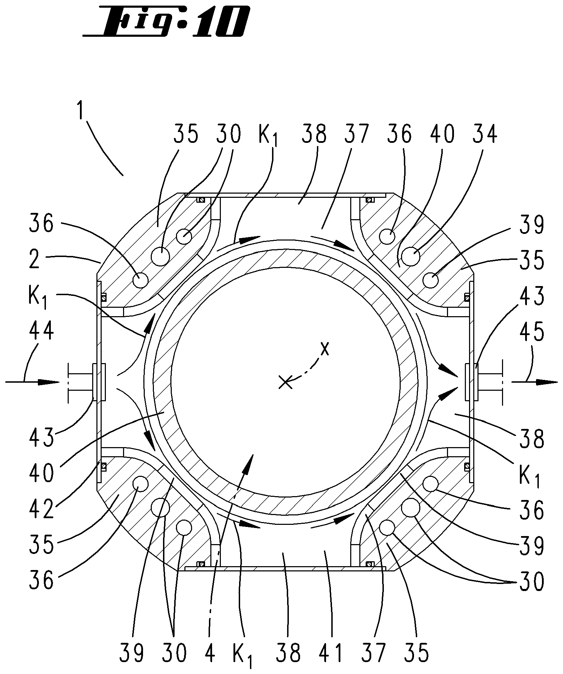

Der Antriebsabschnitt A besitzt ein Gehäuse 2. Dieses ist als Leichtmetall-Gussteil ausgebildet und weist in dem dem Gebläseabschnitt B zugewandten Endbereich eine hohlzylindrische Form mit kreisrundem Querschnitt auf. Dieser Querschnitt setzt sich im Wesentlichen über die gesamte Längserstreckung des Gehäuses 2 fort, jedoch unter Ausformung von sekantenartig zum Kreisquerschnitt ausgerichteten Planflächen 3. Es sind diesbezüglich vier Planflächen 3 vorgesehen, die im Querschnitt gemäß der Darstellung in Figur 10 in einer Quadratanordnung vorgesehen sind. Entsprechend sind die Eckbereiche des Quadratquerschnittes mit dem Radius des kreisringförmigen Gehäuseabschnittes verrundet.

In dem Gehäuse 2 ist ein Elektroantrieb 4 aufgenommen, mit einem Stator 5 und einem Rotor 6. Letzterer formt eine als Welle, speziell als Hohlwelle ausgebildete Antriebswelle 7 aus.

Die Antriebswellenachse x fällt mit der Gehäuselängsachse zusammen. Die Lagerung der Antriebswelle 7 erfolgt über nicht näher dargestellte Lager, bspw. Magnetlager.

Die Antriebswelle 7 erstreckt sich über den im Grundriss kreisringförmigen Endabschnitt des Gehäuses 2 hinaus, zum drehfesten Anschluss eines Laufrades 8 des Gebläseabschnittes B.

Das dem Laufrad 8 abgewandte Ende des Gehäuses 2 ist durch ein Fußteil 9 verschlossen. Hierzu weist das im Allgemeinem als Hohlkörper ausgebildete Gehäuse 2 eine gestufte Ausformung 10 auf, in die das entsprechend gestuft ausgebildete Fußteil 9 dichtend einliegt.

Der Gebläseabschnitt B setzt sich im Wesentlichen zusammen aus entlang der Wellenachse x hintereinander angeordneter, rotationssymmetrischer Bauteile.

So weist der Gebläseabschnitt B zunächst einen Kühlkanaldeckel 11 auf. Zu diesem Kühlkanaldeckel 11 folgt - in vom Gehäuse 2 in Wellenachsrichtung abgewandter Reihenfolge -, ein, ein erstes Gehäuseteil 13 bildendes Kühlkanalgehäuse 14. Dieses ist mit dem Kühlkanaldeckel 11 zur Abdeckung der zum Gehäuse 2 gerichteten Seite des Kühlkanalgehäuses 14 schraubverbunden.

Ein weiteres, mit der Ziffer 15 bezeichnetes Ringteil ist Bestandteil des Antriebsabschnitts A und ist mit dem Gehäuse 2 verschraubt.

Auch das erste Gehäuseteil 13 bzw. das Kühlkanalgehäuse 14 ist im Grundriss als ringförmiges Bauteil gebildet, mit einem freien Innendurchmesser, der gegenüber dem ringförmigen Kühlkanal-Adapterteil 15 verringert ist. Der Innendurchmesser des Kühlkanal-Adapterteils 15 ist angepasst an den freien Innendurchmesser des zugewandten, kreisringabschnittförmigen Gehäuses.

Zudem ist der freie Innendurchmesser des Kühlkanalgehäuses 14 etwas geringer gewählt als der maximale Außendurchmesser des Laufrades 8, welches in weiterer Anordnung auf der dem Kühlkanaldeckel 11 abgewandten Seite des Kühlkanalgehäuses 14 positioniert und dort drehfest mit der Antriebswelle 7 verbunden ist.

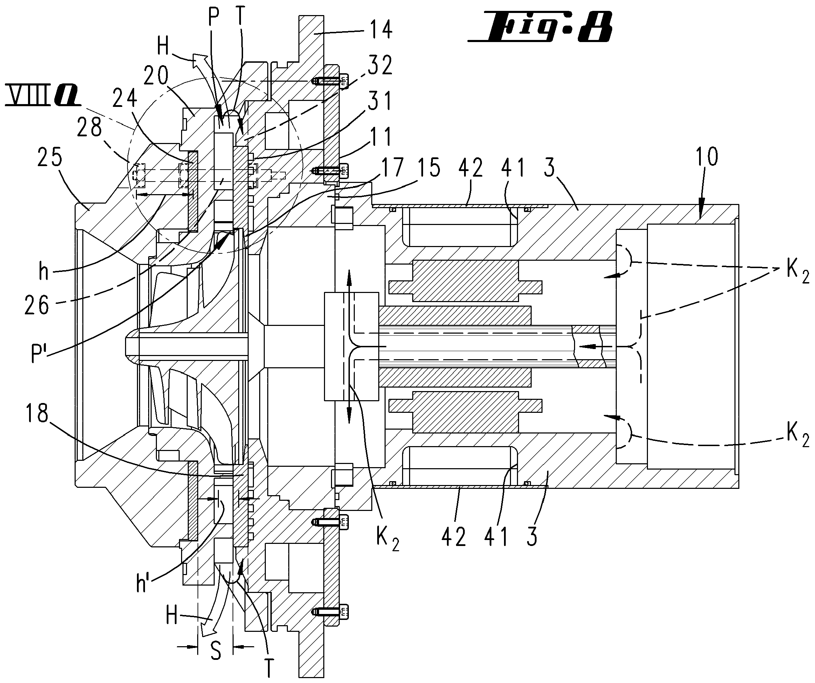

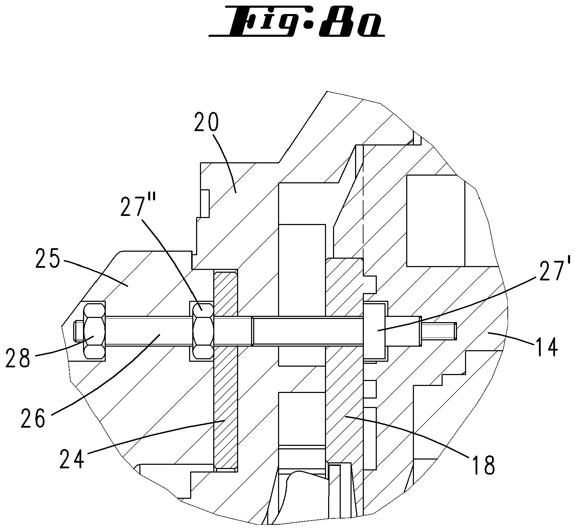

Das Laufrad 8 weist ausgehend von einem Zentralbereich radial nach Außen sich erstreckende Schaufeln 16 auf, die in Radialrichtung unterschiedlich hoch, das heißt nach radial Außen mit abnehmender Höhe geformt sind. Die nach radial Außen aufweisenden Randkanten der Schaufeln 16 sind im Querschnitt beispielsweise gemäß der Darstellung in Figur 8 in etwa konkav geformt, wobei im Bereich der größten Radialerstreckung der Schaufeln 16, das heißt in dem dem Kühlkanalgehäuse 14 zugewandten Fußbereich des Laufrades 8 eine Höhe h' der Schaufeln 16 gewählt ist, die etwa einem Viertel der in Achsrichtung gemessenen Gesamthöhe h des Laufrades 8 entspricht.

Die dem Laufrad 8 zugewandte Seite des Kühlkanalgehäuses 14 ist mit einer zentralen, scheibenförmigen Einsenkung 17 versehen. Diese ist gegenüber dem Fußbereich des Laufrades 8 durchmesservergrößert.

In der Einsenkung 17 liegt eine im Grundriss kreisringförmige Käfigplatte 18 ein. Diese besteht aus einem zähharten Werkstoff, wie beispielsweise Stahl ST50. Der Außendurchmesser dieser Käfigplatte 18 ist angepasst an den Innendurchmesser der kühlkanalgehäuseseitigen Einsenkung 17. Der Innendurchmesser der Käfigplatte 18 ist so gewählt, dass das Laufrad 8 mit seiner größten Radialerstreckung, das heißt mit dem Fußbereich freidrehend unter Belassung eines geringen Spaltes in dem Ringraum der Käfigplatte 18 einliegt. Darüber hinaus ist die Käfigplatte 18 so geformt, dass diese das Laufrad 8 nach radial Innen untergreift. Entsprechend geht von dem inneren Ringrad der Käfigplatte 18 ein gegenüber der Gesamtstärke der Käfigplatte 18 geringer stark bemessener Ringkragen 19 nach radial Innen ab.

Auf der dem Kühlkanalgehäuse 14 abgewandten Seite der Käfigplatte 18 ist ein gleichfalls als rotationssymmetrisches Bauteil ausgeformter Diffusor 20 festgelegt. Dieser weist ein zentralen Einlassquerschnitt auf, in welchen das Laufrad 8 eintaucht. Zu dem ist in bekannter Weise ein unmittelbar oberhalb der Käfigplatte 18 verbleibender, sich nach radial Außen öffnender Ringspalt 21 durchsetzt von Diffusorschaufeln 22, die die radial austretende Gasströmung vergleichmäßigt und hierbei den Gasdruck nach radial Außen erhöht.

Auch der Diffusor 20 weist auf der der Käfigplatte 18 abgewandten Oberseite eine konzentrisch zur Wellenachse x ausgerichtete, kreisringförmige Vertiefung 23 auf. In dieser liegt eine weitere Käfigplatte 24 ein, die in dem dargestellten Ausführungsbeispiel eine in Wellenachsrichtung x gemessene Stärke aufweist, die etwa zwei Drittel der Stärke der unterseitig des Diffusors 20 vorgesehenen Käfigplatte 18 entspricht. Auch diese Käfigplatte 24 besteht aus einem zähharten Werkstoff wie Stahl ST50.

Auf der Käfigplatte 24 ist abschließend ein auch den trichterförmigen Ansaugabschnitt des Diffusors 20 überfangender, den axialen Gaseinlauf ausformender Gehäusedeckel 25 angeordnet. Dieser, wie auch der Diffusor 20 und/oder das Kühlkanalgehäuse 14 und/oder das Kühlkanal-Adapterteil 15 und das Gehäuse 2 bestehen bevorzugt aus einem Leichtmetall-Gusswerkstoff, wie beispielsweise Aluminium.

Gehäusedeckel 25 und Kühlkanalgehäuse 14 sind unter Zwischenlage der beiden Käfigplatten 24 und 18 sowie des Diffusors 20 gegeneinander verspannt. Hierzu dienen im dargestellten Ausführungsbeispiel sieben über den Umfang gleichmäßig verteilt angeordnete Verbindungsmittel 26 in Form von zumindest endseitig Schraubgewinde aufweisenden Stifte 27. Diese sind einerseits begrenzt in entsprechende Gewindebohrungen des Kühlkanalgehäuses 14 eingeschraubt und bilden hiernach entsprechend parallel zur Wellenachse x ausgerichtete Führungs- und Sicherungsstifte. Diese stehbolzenartig eingesetzten Stifte 27 weisen Radialkragen 27' auf, die in entsprechend ausgeformten Vertiefungen des Kühlkanalgehäuses 14 einliegen derart, dass diese mit der zugeordneten Oberfläche des Kühlkanalgehäuses 14 im Wesentlichen fluchten. Über diese Stifte 27 werden im Zuge der Montage zunächst die untere Käfigplatte 18 - wonach zunächst das Laufrad 8 auf der Antriebswelle 7 befestigt wird - dann der Diffusor 20 und die Käfigplatte 24 in Achserstreckungsrichtung aufgeschoben. Hiernach erfolgt eine Axialsicherung der Käfigplatte 24 mittels auf die Stifte 27 aufgedrehter Stahlmuttern 27", die in entsprechend ausgebildeten Einsenkungen des abschließend aufzusetzenden Gehäusedeckels 25 einliegen. Auf die den Gehäusedeckel 25 weiter durchsetzenden Stiftenden werden Schraubmuttern 28 gedreht, zur Einspannung bzw. Festlegung der vorgenannten Bauteile.

Auch die stiftartigen Verbindungsmittel 26 sowie deren Radialkragen 27' als auch die Muttern 27" sind aus einem zähharten Werkstoff wie Stahl ST50 geformt, bilden entsprechend zusammen mit den Käfigplatten 18 und 24 einen Käfig 29, der dem Schutz des Gehäuses 2 bzw. der gebläseabschnittseitigen Bauteile wie bzw. des Gehäusedeckels 25 bei einem Bersten des Laufrades 8 dient.

Der zwischen den beiden Käfigplatten 18 und 24 belassene, insbesondere von den Diffusorschaufeln 22 durchsetzte Spalt s bedeckt nur einen Teilbereich der Höhe h und der Laufrad-Schaufeln 16, nämlich etwa den Bereich einer halben Höhe h und somit zumindest die Höhe h' der Schaufeln 16 in ihrer größten radialen Erstreckung, das heißt im Bereich des Fußbereiches des Laufrades 8.

Durch die beschriebene Ausgestaltung des gebildeten Käfigs 29 aus zähhartem Werkstoff ist gewährleistet, dass bei einem Bersten des Laufrades 8 keine großen und somit gefährlichen Bruchstücke fliegkraftabhängig nach radial Außen geschleudert werden. Auch ist einer Beschädigung des Gehäusedeckels 25 und/oder des Gehäuses 2 bzw. des unterseitig des Spaltes s angeordneten Kühlkanalgehäuses 14 durch Bruchstücke entgegengewirkt. Die Käfigplatten 24 dienen hierbei als Schutzschild gegen eine durch Zerstörung hervorgerufene Vergrößerung des Radialspaltes. Durch die jeweils rückwärtige Abstützung der Käfigplatten 18 und 24 an den Kragen 27' und Muttern 27" ist einer Spaltvergrößerung zwischen den Käfigplatten 18 und 24 sicher entgegengewirkt (vgl. Fig. 8a).

Das Radialgebläse 1 verfügt insbesondere zur Kühlung des Elektroantriebes 4 über ein Kühlsystem, welches im Wesentlichen zweigeteilt ist. So ist ein Primär-Kühlsystem vorgesehen, welches eine hermetisch nach außen abgeschottete, interne Gasströmung nutzt. Ein Sekundär-Kühlsystem ist als Wasserkühlung ausgebildet, welche das Gehäuse 2 durchsetzend nach außen geführt und dort mit entsprechenden Pumpmitteln oder der gleichen gefördert wird.

Das mit K₂ in den Zeichnungen bezeichnete zweite Kühlmedium ist die vorgenannte interne Gasströmung des Primär-Kühlsystems. Hierbei wird die Druckdifferenz im Betrieb des Radialgebläses 1 zwischen dem Bereich des radial äußeren Umfangs des Laufrades 8 und dem radial Außen liegenden Austrittbereich des Diffusor-Ringspaltes 21 genutzt, um hieraus eine selbsttätige, nicht aktiv unterstützte Strömung zu erreichen. So herrscht im Bereich des radial äußeren Umfangs des Laufrades 8 ein niedrigerer Druck P' als am radial äußeren Austrittbereich des Ringspaltes 21. Der dort zur Folge der Diffusorschaufeln 22 erhöhte Druck P entspricht in etwa dem Zweifachen des radial inneren Druckes P'.

Die hieraus resultierende Druckdifferenz wird dazu genutzt, aus dem radial austretenden Hauptgasstrom H einen Teilgasstrom T abzuzweigen, um diesen über entsprechende Wege 30 der Kühlung des Elektroantriebes 4 zuzuführen. Der Wiedereintritt in den Hauptgasstrom H erfolgt im Bereich des niedrigeren Druckes P' also im Bereich des radial äußeren Umfangs des Laufrades 8, zur Folge dessen eine Gaszirkulation erreicht ist.

Das Gas ist bevorzugt Helium und/oder Stickstoff und/oder Luft und/oder ein Gemisch aus zwei oder mehreren der genannten Gase.

Die vorbeschriebenen Wege 30 für das zweite Kühlmedium K₂ verlaufen im Wesentlichen parallel ausgerichtet zur Wellenachse x und erstrecken sich weiter im Wesentlichen zwischen dem Kühlkanalgehäuse 14 und dem gehäuseseitigen Fußteil 9.

Auf der der Käfigplatte 18 zugewandten Oberseite ist das Kühlkanalgehäuse 14 mit mehreren, in dem dargestellten Ausführungsbeispiel mit sieben labyrinthartigen Gehäusewegen 31 versehen, die radial außen über jeweils einen Stichkanal 32 in dem radial äußeren Bereich des Ringspaltes 21, in welchem in Betrieb des Radialgebläses 1 der erhöhte Druck P vorherrscht, münden. Das andere Ende jedes labyrinthartigen Gehäuseweges geht radial innenseitig des Kühlkanalgehäuses 14 über in einen Axialkanal 33, der in Anschluss steht mit einer entsprechend positionierten Axialbohrung 34 in dem dem Gehäuse 2 zugeordneten Ringteil 15.

Die labyrinthartigen Wege 31 sind mit Blick auf einen Grundriss des Kühlkanalgehäuses 14 mäanderförmig ausgerichtet, wobei in jedem Zwischenraum zwischen zwei über den Umfang benachbarten stiftartigen Verbindungsmitteln 26 ein solcher labyrinthartiger Weg 31 vorgesehen ist.

Die den Elektroantrieb 4 umfassende Gehäusewandung 35 ist massiv gestaltet, formt entsprechend auch einen Kühlkörper aus.

In Verlängerung zu den Axialbohrungen 34 des Ringteils 15 erstrecken sich in der Gehäusewandung 35 Kühlmittelkanäle 36. Diese verlaufen parallel ausgerichtet zur Wellenachse x im Bereich der im Querschnitt betrachtenden verrundeten Eckbereiche zwischen zwei benachbarten Planflächen 3. Wie insbesondere aus der Schnittdarstellung in Figur 10 zuerkennen, sind jedem Eckbereich der Gehäusewandung 35 drei solcher Kühlmittelkanäle 36 zugeordnet, welche jeweils mit einer entsprechenden Anzahl von Bohrungen und Kanälen in dem Ringteil 15 bzw. in dem Kühlkanalgehäuse 14 in Verbindung stehen.

Wie erwähnt, erfolgt die Primärkühlung mittels Differenzdruck gesteuertem, aus dem Hauptgasstrom H abgeteiltem Teilgasstrom T. Dieser Teilgasstrom T wird von der radial äußeren Position des Ringspaltes 21 im Bereich des Diffusors 20 abzweigend nach radial Innen durch die labyrinthartigen Gehäusewege 31 des Kühlkanalgehäuses 14 geführt. Sodann durchsetzt der Teilgasstrom T die Axialkanäle 33 des Kühlkanalgehäuses 14, die Axialbohrungen 34 des Ringteils 15 sowie die Kühlmittelkanäle 36 im Bereich der Gehäusewandungen 35 um abschließend in dem dem Laufrad 8 abgewandten Ende des Gehäuses 2 im Bereich des dort vorgesehenen Fußteils 9 mittels nicht näher dargestellter Wege um etwa 180° umgelenkt zu werden. Hiernach wird der Teilgasstrom T zum Teil durch den Zwischenraum zwischen Rotor 6 und Stator 5 geführt. Zum weiteren Teil strömt ein Teil des Gases auch durch die als Hohlwelle ausgeformte Antriebswelle 7, um im Bereich unterhalb des Laufrades 8 nach radial außen in den Innenraum des Gehäuses 2 auszutreten. Von diesem Gehäuseinnenraum aus gelangt der Teilgasstrom T im Bereich des radial äußeren Umfangs des Laufrades 8 im Niedrigdruckbereich P' zurück in den zu verdichtenden Hauptgasstrom.

Eine erste Kühlung des Teilgasstromes T erfolgt durch Kontakt mit der Gehäusewandung 35. Der Kühleffekt wird weiter durch das aktive, Sekundär-Kühlsystem gesteigert. Hierbei handelt es sich um eine Wasserkühlung. Dieses mit K₁ bezeichnete erste Kühlmedium wird durch Wege 37 geführt, die in dem dargestellten Ausführungsbeispiel senkrecht zu den Wegen 30 des zweiten Kühlmediums K₂ verlaufen. So verlaufen diese Wege 37 in Umfangsrichtung mit Bezug auf die Wellenachse x, dies über einen axialen Bereich sich erstreckend, der in etwa den Statorbereich überdeckt.

Zur Ausformung der Wege 37 sind zunächst außenwandseitig des Gehäuses 2, zugeordnet den Planflächen 3 im Querschnitt nach außen hin sich zunächst öffnende kammerartige Gehäuseausnehmungen 38 vorgesehen. Diese sind entsprechend jeweils zwischen zwei in Umfangsrichtung benachbarten, verrundeten Eckbereichen der Gehäusewandung 35 positioniert, in welchen Eckbereichen - wie erwähnt - die senkrecht zu diesen Wegen 37 verlaufenden Wege 30 für das zweite Kühlmedium K₂ platziert sind.

Die in dem dargestellten Ausführungsbeispiel vier im 90°-Winkel zueinander versetzt angeordneten kammerartigen Gehäuseausnehmungen 38 sind untereinander strömungstechnisch verbunden durch vorgesehene Bohrungen 39, die so platziert sind, dass sowohl in Richtung zu dem im Gehäuse innenseitig angeordneten Stator 5 als auch in Richtung auf die in den Eckbereichen der Gehäusewandung 35 verlaufenden Gasströmungs-Wege 35 Gehäusematerial verbleibt. Entsprechend sind die Wege 37 des ersten Kühlmediums K₁ und die Wege 30 des zweiten Kühlmediums K₂ durch unversehrte Materialwandungen 40 voneinander getrennt.

Die Verbindungen der Gehäuseausnehmungen 38 untereinander können alternativ zu den vorgeschlagenen Bohrungen 39 auch gusstechnisch gelöst sein. Durch die strömungsmäßige Verbindung der Gehäuseausnehmungen 38 miteinander ist ein umfangsmäßig umlaufender Weg 37 für das erste Kühlmedium K₁ geschaffen.

In Axialrichtung betrachtet sind die kammerartigen Gehäuseausnehmungen 38 von integralen Wänden 41 des Gehäuses 2 begrenzt. Nach radial außen ist eine Begrenzung der Gehäuseausnehmungen 38 mittels plattenförmiger Abdeckungen 42 erreicht, welche dichtend entlang dem außenwandseitig des Gehäuses 2 umlaufenden Ausnehmungsrandes im Bereich der benachbarten Gehäuse-Eckausformungen festgelegt sind.

Eine Abdeckung 42 ist hierbei mit einem Anschluss 43 versehen, zur Bildung eines Kühlmediumzulaufs 44. Die dieser Abdeckung diametral gegenüberliegende Abdeckung 42 weist gleichfalls einen Anschluss 43 auf, zur Bildung eines Kühlmediumablaufs 45.

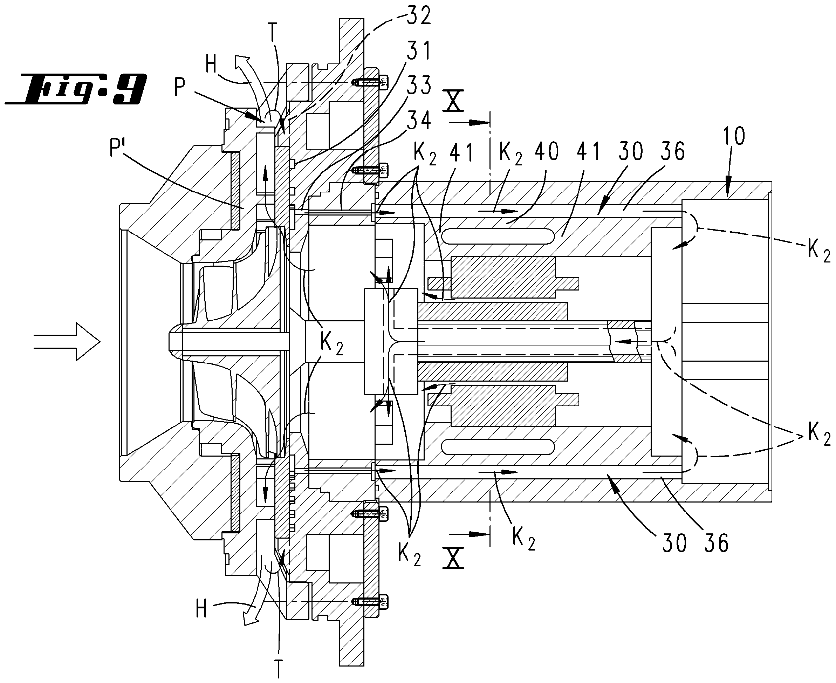

Wie weiter insbesondere aus den Darstellungen in den Figuren 9 und 10 zu erkennen, sind die, die kammerartigen Gehäuseausnehmungen 38 verbindenden Bohrungen 39 als sich in etwa über die gesamte axiale Länge des Gehäuseinneren angeordneten Stators 5 erstreckende Langlochbohrungen ausgeführt.

In Radialerstreckung sind die Wege 37 des ersten Kühlmediums K₁ (Wasserkreislauf) jedenfalls im Bereich zwischen den kammerartigen Gehäuseausnehmungen 38, das heißt im Bereich der die Wege 30 aufnehmenden, massiven Gehäuseeckbereichen, radial Innen zu den Wegen 30 des zweiten Kühlmediums K₂ (Gaskreislauf) angeordnet.

Die Wege 30 und 37 der beiden Kühlmedien K₁ und K₂ verlaufen windschief zueinander, dies unter Verzicht von etwaigen Dichtungsmitteln zur Trennung der Wege 30 und 37 voneinander. Diese Trennung ist lediglich durch unversehrtes Gehäusematerial erreicht.

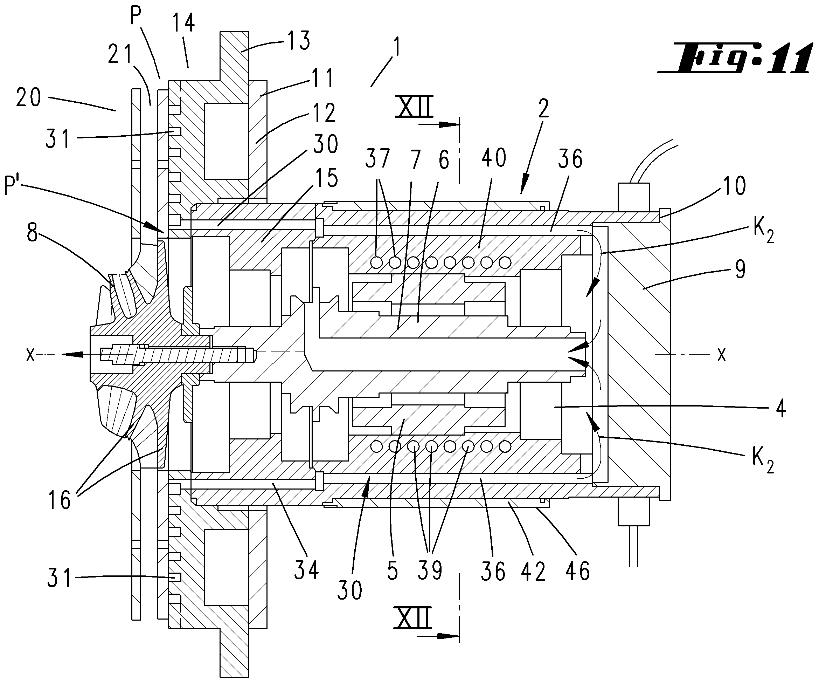

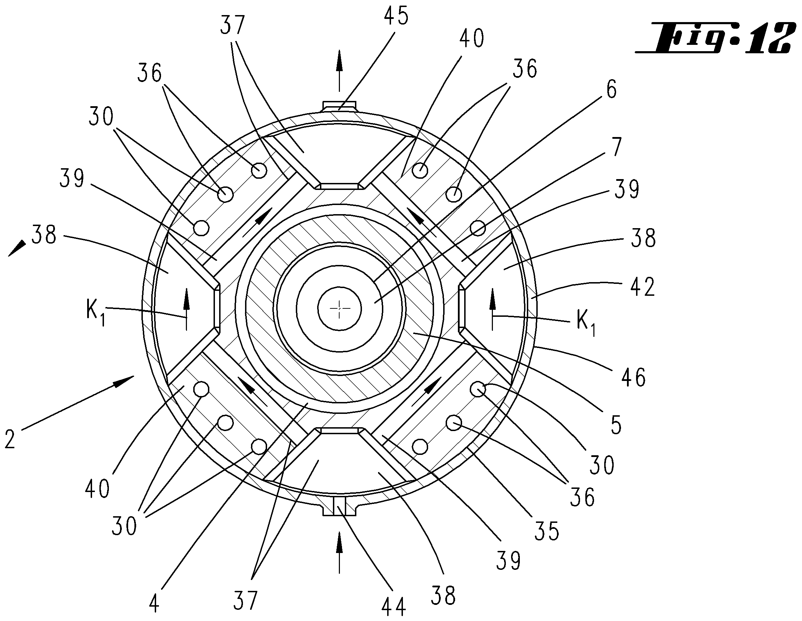

Die Figuren 11 bis 13 zeigen eine alternative Ausführungsform des Radialgebläses 1, insbesondere des Gehäuses 2. In der Darstellung zu dieser Ausführungsform ist auf die Anordnung des Käfigs, sowie des Diffusors und des Gehäusedeckels verzichtet worden.

Die Funktionsweise, sowie der allgemeine Verlauf der Kühlkreisläufe entspricht denen des zuvor beschriebenen Ausführungsbeispiels.

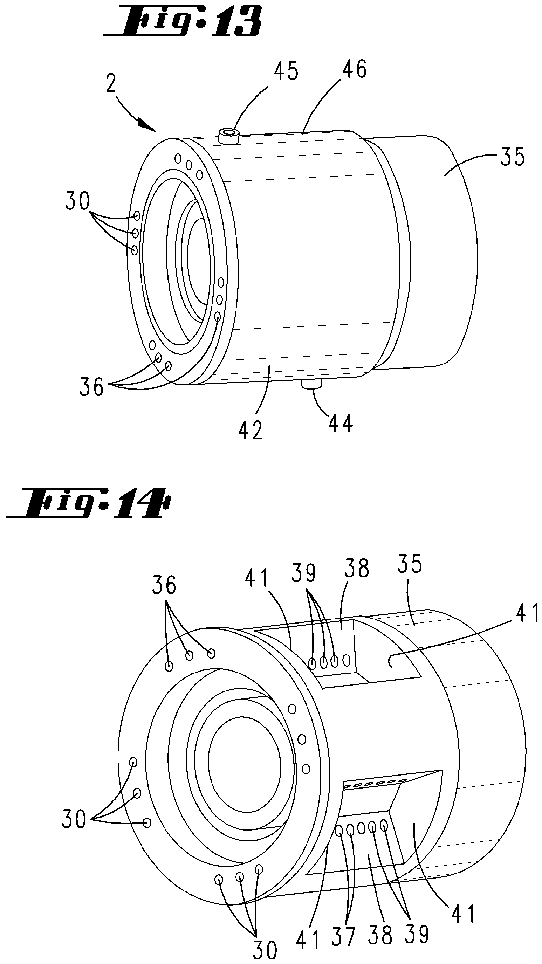

Der wesentliche Unterschied besteht in der Gesamtgestaltung des Gehäuses 2. Dieses ist in diesem zweiten Ausführungsbeispiel im Wesentlichen durchgehend zylinderartig mit kreisrundem Querschnitt geformt. Aus der massiven Gehäusewandung 35 sind vier über den Umfang gleichmäßig verteilt angeordnete, kammerartige Gehäuseausnehmungen 38 freigeformt, zwischen welchen - über den Umfang betrachtet - unversehrte Gehäusewandungsabschnitte verbleiben, durch welche in Achsrichtung verlaufende Wege 30 für das zweite Kühlmedium K₂ aufgenommen sind. Letztere sind einem radial äußeren Bereich dieser Wandungsabschnitte zugeordnet. Im radial inneren Bereich dieser Wandungsabschnitte sind die die kammerartigen Gehäuseausnehmungen 38 verbindenden Bohrungen 39 vorgesehen. Wie insbesondere aus der Perspektivdarstellung in Figur 14 zuerkennen, weist jede kammerartige Gehäuseausnehmung 38 eine Mehrzahl von in Erstreckungsrichtung der Wellenachse x hintereinander angeordnete Bohrungen 39 auf, die gemäß der Schnittdarstellung in Figur 11 im Wesentlichen den in selber Richtung betrachteten Statorerstreckungsbereich abdecken.

In dieser zweiten Ausführungsform ist die die kammerartigen Gehäusausnehmungen 38 verschließende Abdeckung 42 als ein das Gehäuse 2 umfassendes Rohrteil 46 gebildet, welches mit entsprechend positionierten Dichtmitteln auf der Außenseite der Gehäusewandung 35 festlegbar ist.

An zwei diametral sich gegenüberliegenden Bereichen, jeweils zugeordnet einer kammerartigen Gehäuseausnehmung 38 ist einerseits der Ktihlmediumzulauf 44 und andererseits der Kühlmediumablauf 45 ausgeformt.

## Patentansprüche

1. Radialgebläse (1), bevorzugt hochtouriges Radialgebläse, mit einem Laufrad (8) und einem Gehäuse (2), wobei das Gehäuse (2) zur Ausbildung eines Deckels (25) geteilt ist, wobei jedenfalls der Deckel (25) aus einem Leichtmetall-Gusswerkstoff besteht, **dadurch gekennzeichnet, dass** zur Ausbildung eines das Laufrad (8) umschließenden Käfigs (29) deckelseitig und unterseitig des Laufrades (8) Käfigplatten (18, 24) vorgesehen sind, die umfangsseitig des Laufrades (8) durch bspw. stiftartige Verbindungsmittel (26) zusammen gehalten sind, wobei zumindest die Verbindungsmittel (26) und die deckelseitige Käfigplatte (24) aus einem zähharten Werkstoff wie Stahl bestehen.

2. Radialgebläse nach Anspruch 1, **dadurch gekennzeichnet, dass** das Gehäuse (2) zur Ausbildung des Deckels (25) parallel zu einer Umdrehungsebene des Laufrades (8) geteilt ist.

3. Radialgebläse nach einem der Ansprüche 1 oder 2, **dadurch gekennzeichnet, dass** beide Käfigplatten (18, 24) aus einem zähharten Werkstoff wie Stahl bestehen.

4. Radialgebläse nach einem der Ansprüche 1 bis 3, **dadurch gekennzeichnet, dass** auch das Gehäuse (2) im Übrigen als ein Leichtmetall-Gussteil ausgebildet ist.

5. Radialgebläse nach einem der Ansprüche 1 bis 4, **dadurch gekennzeichnet, dass** die Verbindungsmittel (26) sowohl in dem Gehäuse (2) als auch in dem Deckel (25) schraubgehaltert sind.

6. Radialgebläse nach einem der Ansprüche 1 bis 5, **dadurch gekennzeichnet, dass** unterhalb des Gehäusedeckels (25) ein Diffusorteil (20) angeordnet ist und die deckelseitige Käfigplatte (24) zwischen dem Gehäusedeckel (25) und dem Diffusorteil (20) angeordnet ist.

7. Radialgebläse nach Anspruch 6, **dadurch gekennzeichnet, dass** die Verbindungsmittel (26) das Diffusorteil (20) durchsetzen.

8. Radialgebläse nach einem der Ansprüche 1 bis 7, **dadurch gekennzeichnet, dass** unterhalb des Laufrades (8) ein erstes Gehäuseteil (13) angeordnet ist, an dem auf der dem Laufrad (8) abgewandten Seite ein Kühlkanaldeckel (11) angebracht ist.

9. Radialgebläse nach einem der Ansprüche 1 bis 8, **dadurch gekennzeichnet, dass** die Verbindungsmittel (26) als endseitig Schraubgewinde aufweisende Stifte (27) ausgebildet sind.

10. Radialgebläse nach einem der Ansprüche 1 bis 9, **dadurch gekennzeichnet, dass** die Käfigplatten (18, 24) als kreisringförmige Teile ausgebildet sind.

11. Radialgebläse nach Anspruch 10, **dadurch gekennzeichnet, dass** der Innendurchmesser einer Käfigplatte (18, 24) an den Außendurchmesser des Laufrades (8) angepasst ist.

12. Radialgebläse nach einem der Ansprüche 10 oder 11, **dadurch gekennzeichnet, dass** die Radialerstreckung des kreisringförmigen Teils einem Radialmaß oder weniger des Laufrades (8) entspricht.

13. Radialgebläse nach einem der Ansprüche 1 bis 12, **dadurch gekennzeichnet, dass** das Laufrad (8) Schaufeln (16) aufweist, mit in Radialrichtung unterschiedlichen Höhen (h), und dass der durch die Käfigplatten (18, 24) gebildete Spalt (s) nur einen Teilbereich der Höhe (h) der Schaufeln (16) überdeckt und zwar den Teilbereich, der mindestens der Höhe (h') der Schaufeln (16) in ihrer größten radialen Erstreckung entspricht.

14. Radialgebläse nach Anspruch 13, **dadurch gekennzeichnet, dass** die untere Käfigplatte (18) sich in Axialrichtung bis in einen Fußbereich der Schaufeln (16) erstreckt.

15. Radialgebläse nach einem der Ansprüche 1 bis 14, **dadurch gekennzeichnet, dass** die untere Käfigplatte (18) radial Innen das Laufrad (8) untergreift.

16. Radialgebläse nach einem der Ansprüche 13 bis 15, **dadurch gekennzeichnet, dass** die Höhe des Spaltes (s) der Hälfte oder weniger der Gesamthöhe (h) des Laufrades (8) entspricht.

17. Radialgebläse nach einem der Ansprüche 1 bis 16, **dadurch gekennzeichnet, dass** bei einem Durchmesser von 100 Millimetern oder mehr des Laufrades (8) im Fußbereich mindestens ein Verbindungsmittel (26) je 25 Millimeter Durchmesser vorgesehen ist.

18. Radialgebläse nach Anspruch 17, **dadurch gekennzeichnet, dass** bei 150 Millimetern Durchmesser sechs oder mehr Verbindungsmittel (26) über den Umfang winkelmäßig gleichmäßig verteilt vorgesehen sind.

## Claims

1. Radial fan (1), preferably high-speed radial fan, having an impeller (8) and a housing (2), the housing (2) being divided in order to form a cover (25), and at least the cover (25) consisting of a light-metal casting material, **characterized in that**, in order to form a cage (29) which encloses the impeller (8), cage plates (18, 24) are provided on the cover side and underside of the impeller (8), and these cage plates are held together around the periphery of the impeller (8) by, for example, stud-like connecting means (26), at least the connecting means (26) and the cover-side cage plate (24) consisting of a hard and tough material such as steel.

2. Radial fan according to Claim 1, **characterized in that** in order to form the cover (25), the housing (2) is divided parallel to a plane of revolution of the impeller (8).

3. Radial fan according to either of Claims 1 or 2, **characterized in that** both cage plates (18, 24) consist of a hard and tough material such as steel.

4. Radial fan according to one of Claims 1 to 3, **characterized in that** the housing (2) is in the form moreover of a light-metal casting.

5. Radial fan according to one of Claims 1 to 4, **characterized in that** the connecting means (26) are screw-connected both in the housing (2) and in the cover (25).

6. Radial fan according to one of Claims 1 to 5, **characterized in that** a diffuser part (20) is disposed beneath the housing cover (25), and the cover-side cage plate (24) is disposed between the housing cover (25) and the diffuser part (20).

7. Radial fan according to Claim 6, **characterized in that** the connecting means (26) pass through the diffuser part (20).

8. Radial fan according to one of Claims 1 to 7, **characterized in that** a first housing part (13) is disposed beneath the impeller (8) and a cooling-channel cover (11) is fitted on the side of the first housing part which is directed away from the impeller (8).

9. Radial fan according to one of Claims 1 to 8, **characterized in that** the connecting means (26) are in the form of studs (27) which have screw threads at the ends.

10. Radial fan according to one of Claims 1 to 9, **characterized in that** the cage plates (18, 24) are in the form of annular parts.

11. Radial fan according to Claim 10, **characterized in that** the internal diameter of a cage plate (18, 24) is adapted to the external diameter of the impeller (8).

12. Radial fan according to either of Claims 10 or 11, **characterized in that** the radial extent of the annular part corresponds to a radial dimension of the impeller (8) or less.

13. Radial fan according to one of Claims 1 to 12, **characterized in that** the impeller (8) has blades (16), having different heights (h) in the radial direction, and **in that** the gap (s) formed by the cage plates (18, 24) overlaps only part of the height (h) of the blades (16), to be precise that part which corresponds at least to the height (h¹) of the blades (16) at their greatest radial extent.

14. Radial fan according to Claim 13, **characterized in that** the lower cage plate (18) extends axially into a foot region of the blades (16).

15. Radial fan according to one of Claims 1 to 14, **characterized in that** the lower cage plate (18) engages beneath the impeller (8) in the radially inward direction.

16. Radial fan according to one of Claims 1 to 15, **characterized in that** the height of the gap (s) corresponds to half the overall height (h) of the impeller (8) or less.

17. Radial fan according to one of Claims 1 to 16, **characterized in that**, in the case of the impeller (8) having a diameter of 100 millimeters or more in the foot region, at least one connecting means (26) is provided for each 25 millimeters of diameter.

18. Radial fan according to Claim 17, **characterized in that**, in the case of a diameter of 150 millimeters, six or more connecting means (26) are distributed at uniform angles over the circumference.

## Revendications

1. Ventilateur radial (1), préférentiellement ventilateur radial à vitesse de rotation élevée, comprenant une roue à pales (8) et un boitier (2), dans lequel le boitier (2) est scindé pour former un couvercle (25) lequel couvercle (25) est réalisé en un matériau de moulage en métal léger, **caractérisé en ce que** sont prévues des plaques de cage (18, 24) du côté du couvercle et du côté sous la roue à pales pour former une cage (29) entourant la roue à pales (8) lesquelles plaques de cage (18, 24) sont maintenues ensembles du côté circonférentiel de la roue à pales (8) par des moyens de liaison (26) qui sont par exemple sous la forme de broches, dans lequel au moins les moyens de liaison (26) et la plaque de cage (24) du côté du couvercle sont réalisés en un matériau dur tel que de l'acier.

2. Ventilateur radial selon la revendication 1, **caractérisé en ce que** pour former le couvercle (25), le boîtier (2) est scindé parallèlement à un plan de révolution de la roue à pales (8).

3. Ventilateur radial selon la revendication 1 ou 2, **caractérisé en ce que** les deux plaques de cage (18, 24) sont réalisées en un matériau dur tel que de l'acier.

4. Ventilateur radial selon l'une des revendications 1 à 3, **caractérisé en ce que** le reste du boîtier (2) est également réalisé en tant que pièce moulée en métal léger.

5. Ventilateur radial selon l'une des revendications 1 à 4, **caractérisé en ce que** les moyens de liaison (26) sont maintenus par vissage à la fois dans le boîtier (2) et dans le couvercle (25).

6. Ventilateur radial selon l'une des revendications 1 à 5, **caractérisé en ce qu'**un élément diffuseur (20) est agencé sous le couvercle de boitier (25) et que la plaque de cage (24) du côté du couvercle est agencée entre le couvercle de boitier (25) et l'élément diffuseur (20).

7. Ventilateur radial selon la revendication 6, **caractérisé en ce que** les moyens de liaison (26) traversent l'élément diffuseur (20).

8. Ventilateur radial selon l'une des revendications 1 à 7, **caractérisé en ce que** sous la roue à pales (8) est agencée une première partie de boîtier (13) à laquelle est fixée un couvercle à canal de refroidissement (11) sur le côté opposé à la roue à aubes (8).

9. Ventilateur radial selon l'une des revendications 1 à 8, **caractérisé en ce que** les moyens de liaison (26) sont réalisées sous forme de goujons (27) filetés à leurs extrémités.

10. Ventilateur radial selon l'une des revendications 1 à 9, **caractérisé en ce que** les plaques de cage (18, 24) sont réalisées sous forme de pièces annulaires.

11. Ventilateur radial selon la revendication 10, **caractérisé en ce que** le diamètre intérieur d'une plaque de cage (18, 24) est adapté au diamètre extérieur de la roue à pales (8).

12. Ventilateur radial selon l'une des revendications 10 ou 11, **caractérisé en ce que** l'extension radiale de la pièce annulaire correspond à une dimension radiale de la roue à pales (8) ou moins.

13. Ventilateur radial selon l'une des revendications 1 à 12, **caractérisé en ce que** la roue à pales (8) présente des pales (16) ayant des hauteurs différentes (h) en direction radiale et **en ce que** l'intervalle (s) formé entre les plaques de cage (18, 24) ne recouvre qu'une partie de la hauteur (h) des pales (16), à savoir la partie qui correspond au moins à la hauteur (h') des pales (16) suivant leur extension radiale maximale.

14. Ventilateur radial selon la revendication 13, **caractérisé en ce que** la plaque de cage inférieure (18) s'étend en direction axiale jusqu'à une région de la base des pales (16).

15. Ventilateur radial selon l'une des revendications 1 à 14, **caractérisé en ce que** la plaque de cage inférieure (18) passe radialement vers l'intérieur sous la roue à aubes (8).

16. Ventilateur radial selon l'une des revendications 13 à 15, **caractérisé en ce que** la hauteur de l'intervalle (s) correspond à la moitié de la hauteur totale (h) de la roue à pales (8) ou moins.

17. Ventilateur radial selon l'une des revendications 1 à 16, **caractérisé en ce que**, pour un diamètre de 100 millimètres ou plus de la roue à pales (8) dans la région de la base des pales, il est prévu au moins un moyen de liaison (26) pour chaque 25 millimètres de diamètre.

18. Ventilateur radial selon la revendication 17, **caractérisé en ce que**, pour un diamètre de 150 millimètres, il est prévu six moyens de liaison (26) ou plus qui sont réparties angulairement de manière régulière autour de la circonférence.
